# EUROPEAN PATENT APPLICATION

(11) **EP 3 028 844 A1**
(43) Date of publication of application: **08.06.2016**
(21) Application number: 14425150.1
(22) Date of filing: 02.12.2014
(51) Int. Cl.: B32B 1/08, B32B 17/10, E04H 12/02, E04C 3/36, F16L 9/10

(54) **Composite glass tube**

(71) Applicant: Isoclima S.p.A., 35042 Este (Padova) (IT)
(72) Inventor: Bertolini, Alberto, 35042 Este (IT)
(74) Representative: Seitz, Ralf Hans Frank

(57) **Abstract**

The present invention relates to a composite glass tube (1) and a corresponding manufacturing method which comprises a glass tube (2) and an anti-shatter layer construction provided on an inside surface of the glass tube (2) for restraining glass parts and splinters in case of breakage of the glass tube (2), wherein the anti-shatter layer construction comprises at least one supporting anti-shatter foil (4) or layer and at least one adhesive anti-shatter foil (3) or layer deposited or laminated on the inside surface (2.1) of the glass tube (2) wherein the supporting anti-shatter foil (4) or layer is arranged on an inside surface (3.1) of the adhesive anti-shatter foil (3) or layer.

## Description

The present invention refers to a composite glass tube, particularly to be used in a glass tube wall installed in a building.

Glass tubes may be used, for instance, in a glass wall installed in a building wherein the glass tubes are arranged next to each other in line to form the glass wall. The glass tubes and glass walls are usually transparent or colored. In most architectural cases the glass walls made of transparent glass tubes or pipes are used as internal walls inside a building which have the purpose of separating rooms. The height of the tubes in a wall may be 2.5 m or even more. In the case of an accident or a similar adverse impact, for instance, overloading of the wall or single tube, a breakage of the glass could result and thus also cutting pieces of glass and glass splinters could fall down from the glass wall which could be dangerous to people near the broken glass wall.

It is thus an object of the present invention to provide a composite glass tube which avoids the distribution of glass splinters or particles in case of breakage of the glass tube.

This object is solved by the composite glass tube of the invention according to claim 1. Accordingly, the composite glass tube of the invention comprises a glass tube and an anti-shatter layer construction provided on an inside surface of the glass tube for restraining glass parts and splinters in case of breakage of the glass tube, wherein the anti-shatter layer construction comprises at least one supporting anti-shatter plastic foil or layer and at least one adhesive anti-shatter plastic foil or layer deposited or laminated on the inside surface of the glass tube wherein the supporting anti-shatter plastic foil or layer is arranged on an inside surface of the adhesive anti-shatter plastic foil or layer.

The glass tube or glass pipe of the invention provides the substantial advantage that the inside anti-shatter layer plastic construction of the tube restrains the glass parts and splinters from moving away from the composite glass tube or glass wall since the single glass parts or splinters are fixed on the anti-shatter layer construction in case of breakage of the glass tube. More detailed, the adhesive anti-shatter plastic layer or film fixes glass splinters resulting in case of breakage of the glass on the supporting anti-shatter plastic layer or film. Accordingly, the supporting anti-shatter plastic foil improves the anti-shatter characteristics of the anti-shatter layer construction substantially, and moreover it supports the adhesive anti-shatter plastic layer or foil with glass splinters thereon in case of breakage of the glass tube. Since glass splinters are fixed to and hold on the supporting anti-shatter plastic layer, the composite glass tube of the invention prevents that people near the composite glass tube or near a glass wall combined by glass tubes are possibly injured by means of glass splinters distributed in case of breakage of a glass tube.

Preferably, the supporting anti-shatter plastic foil is a polyethylene terephthalate (PET) foil or polycarbonate (PC) foil, which may have the advantage of less weight, and the adhesive anti-shatter plastic foil is a polyvinyl butyral (PVB) or polyurethane (PU) foil or layer to ensure the anti-shatter resistance of the combined anti-shatter film. Using foils allows using an autoclave for producing the composite glass tube.

The supporting anti-shatter plastic foil may be segmented lengthwise and/or the adhesive anti-shatter plastic foil may be segmented lengthwise. Further, the supporting anti-shatter plastic foil may be segmented transversely and/or the adhesive anti-shatter plastic foil may be segmented transversely. The segmentation of the foils or films can help to avoid too strong forces due to heat extension during the autoclave procedure. The segmentation may result in a gap or several gaps, optionally lengthwise or transverse, or overlapping of the supporting anti-shatter plastic foil and/or of the adhesive anti-shatter plastic foil in the case of low environmental temperatures of normal usage of the composite glass tube.

The composite glass tube may be used in a wall made of a plurality of composite glass tubes. Further, the composite glass tube may have an annular or circular cross section or profile or any other profile like a rectangular profile or triangular or cornered profile etc.

The invention also refers to a method according to claim 6 for producing a composite glass tube wherein the method comprises the following steps:
- depositing an adhesive anti-shatter plastic foil or layer on an inside surface of a glass tube and then depositing a supporting anti-shatter plastic foil or layer on the inside surface of the adhesive anti-shatter plastic foil or layer; or
- depositing the supporting anti-shatter plastic foil or layer on an outside surface of the adhesive anti-shatter plastic foil or layer to form a combined anti-shatter plastic construction or foil and then depositing the combined anti-shatter plastic construction or foil on the inside surface of the glass tube; and then
- forming the composite glass tube by using pressure and/or heat.

Preferably, the method of the invention uses at least one step of evacuating a space between the supporting anti-shatter plastic foil and the adhesive anti-shatter plastic foil or layer and/or evacuating the space between the glass tube and the adhesive anti-shatter plastic foil or the combined anti-shatter plastic construction or foil, and/or by evacuating the space between the glass tube and the supporting anti-shatter plastic foil in order to remove air or visible air bubbles within the composite glass tube to be produced. The evacuation of air ensures a strong adhesion of the glass and of all possible glass splinters on the supporting anti-shatter plastic foil.

A foil bag may be used for evacuating to ensure a favorable evacuation result.

An assisting glass tube may be used during evacuating to avoid any deformation or distortion of the anti-shatter plastic film during the evacuating step which is particular helpful if the anti-shatter plastic films are thin.

The method of the invention may comprise the step of pressing the supporting anti-shatter plastic foil or layer and the glass tube with intermediate adhesive anti-shatter plastic foil or layer against each other using preferably pressure and/or heating in an autoclave for forming and laminating the composite glass tube.

Further advantageous and preferred embodiments are mentioned in the dependent claims. Additional objects, advantages, and features of the invention could be derived from the following detailed description and drawings of an exemplified and preferred embodiment of the invention, in which:
- Fig. 1: is a schematic sectional view of a preferred embodiment of the composite glass tube of the invention, seen along the line I.-I. in Fig. 2;
- Fig. 2: is a schematic view of the embodiment of the upright composite glass tube of Fig. 1 the invention; and
- Fig. 3: is a schematic view of an upper part of a further embodiment of a composite glass tube of the invention showing a segmentation with gap of the anti-shatter plastic foils.

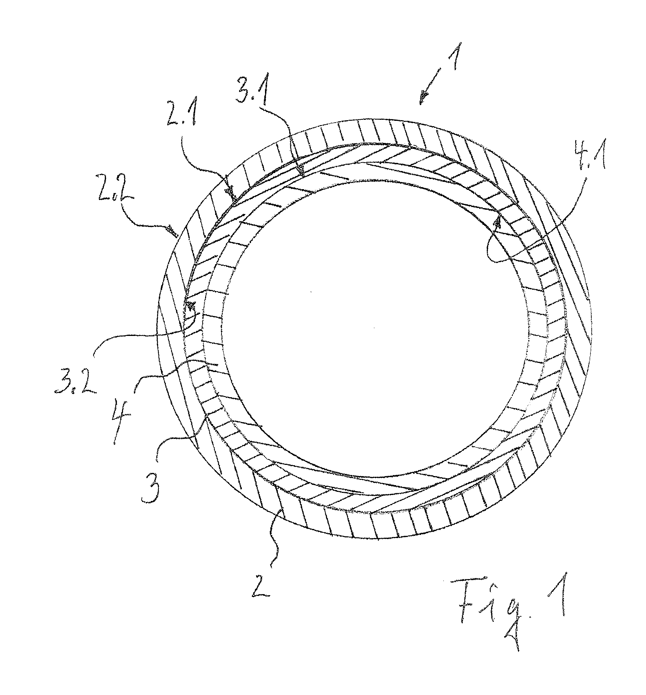

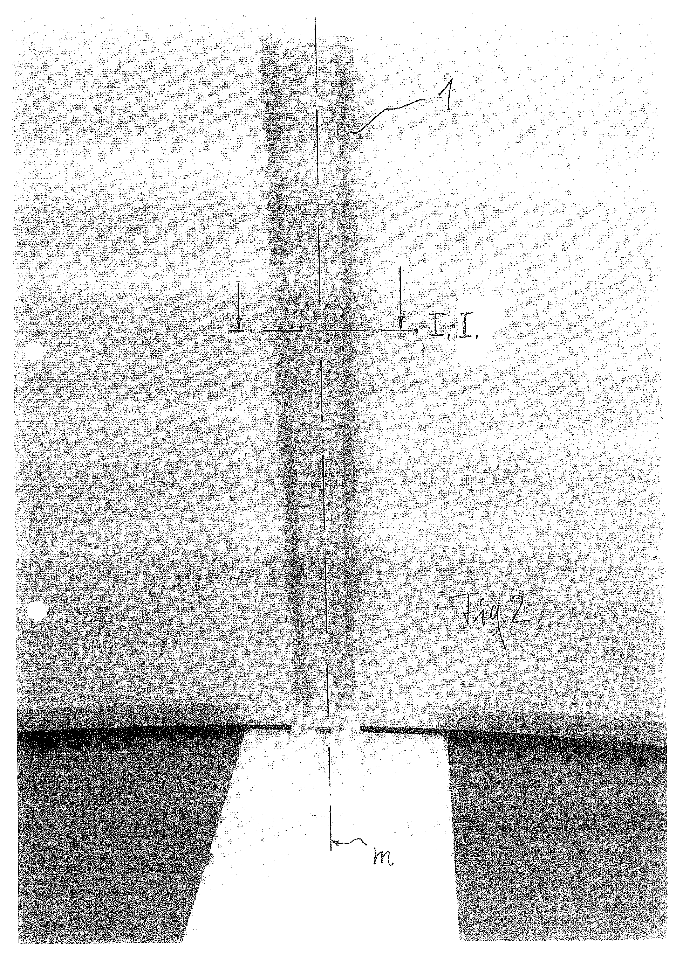

Fig 1 shows a sectional view of a composite glass tube 1 with annular or circular profile according to a preferred embodiment of the invention along a transverse line I.-I. in Fig. 2 showing an upright view of the composite glass tube 1 with a symmetrical axis m of the composite glass tube 1 in vertical or lengthwise direction.

The composite glass tube 1 comprises a glass tube 2, a supporting anti-shatter plastic foil 4, and an intermediate adhesive anti-shatter plastic foil 3 provided between the glass tube 2 and the supporting anti-shatter plastic foil 4 wherein the adhesive anti-shatter plastic foil 3 and the supporting anti-shatter plastic foil 4 are combined to form a combined anti-shatter plastic construction or foil. The composite glass tube 1 shows an annular cross section or profile which means that the composite glass tube 1 is hollow and it is usually an elongated cylindrical upright standing body as shown in Fig. 2. A plurality of such composite glass tubes 1 may be arranged on a line next to each other to form a glass wall, for instance, in a building to separate a room.

The glass tube 2 is made of borosilicate glass and it is clear and transparent. An outside surface 2.2 of the glass tube 2 is subjected to the environment where the composite glass tube 1 is arranged. The usual outside surface diameter of the glass tube 2 is in the range between 100 mm and 150 mm which corresponds also to the usual diameter of the composite glass tube 1. Accordingly, the outside surface of the composite glass tube 1 is made of glass usually provided due to architectural design advantages if it is used in a glass wall or building.

The adhesive anti-shatter plastic foil 3 is clear and transparent and it is made of an adhesive plastic foil like a PU foil, a PVB foil or a EVA foil as used in composite glass production or the anti-shatter plastic foil 3 may be made of a plurality of adhesive plastic foils even of different materials like PU, PVB, and EVA in order to obtain a thicker adhesive anti-shatter plastic foil 3 or layer, for instance, in the case of long composite glass tubes with large diameter and corresponding high weight. The adhesive anti-shatter plastic foil 3 has an outside surface 3.2 and an inside surface 3.1 wherein the outside surface 3.2 is adjacent to the inside surface 2.1 of the glass tube 2. The thickness of the PVB foil used may be 0.76 mm.

The supporting anti-shatter plastic foil 4 is clear and transparent and it comprises a PET foil or in alternative a PC foil or layer again as used in composite glass production. The PET foil or layer of the supporting anti-shatter plastic foil 4 may be selected to be thicker if the length and/or the diameter and/or the thickness of the glass tube 2 is increased resulting in an increased weight of the glass tube 2 and also of the whole composite glass tube 1. A thicker supporting anti-shatter plastic foil 4 or layer or a thicker PET foil means that bigger and heavier glass splinters could be fixed and restrained in the case of breakage of the composite glass tube 1 of increased weight. The supporting anti-shatter plastic foil 4 has an outside surface 4.1 adjacent to the inside surface 3.1 of the adhesive anti-shatter plastic foil 3.

A thickness of the supporting anti-shatter plastic foil 4 or layer made of PET or PC may depend on or may be calculated as a function of the mechanical strength required for the tubes against breakage or crashing through a glass tube wall.

During production of the composite and laminated glass tube 1, a PVB foil used as adhesive anti-shatter plastic foil 3 is cut and prepared as required. The PVB foil, then, is bent and welded to form an adhesive foil tube which is put into the glass tube made of borosilicate glass. Further, a PET foil used as supporting anti-shatter plastic foil 4 is cut and prepared as required. The PET foil, then, is bent and welded to form a supporting foil tube and it is put into the adhesive foil tube within the glass tube 2. Finally, an assisting inner glass tube of appropriate thickness may be put into the space defined by the supporting PET foil tube within the glass tube 2 which touches the supporting PET foil tube.

Afterwards, the unit prepared such comprising the glass tube 2, the adhesive foil tube, the supporting foil tube, and the assisting inner glass tube if used are loaded into a prepared and closeable foil bag made of, for instance, polyethylene and comprising an evacuating valve. Then the closed foil bag is evacuated via the evacuating valve which means that the air within the foil bag is sucked out wherein the assisting inner glass tube prevents a deformation or distortion of the supporting foil tube and/or the adhesive foil tube during evacuating. The evacuation results in a mutual touching of the adjacent surfaces of the glass tube 2 and the adhesive foil tube, and of the adhesive foil tube and the supporting foil tube without visible air or air bubbles between adjacent surfaces.

The prepared unit such evacuated, then, is loaded into an autoclave. The prepared unit is heated to, for instance, ca. 150 °C within the autoclave, may be under pressure, wherein the adhesive foil tube made of PVB softens to form an adhesive connection between the glass tube 2 and the supporting foil tube of PET. Finally, after decreasing the temperature in the autoclave to the environmental value, the unit prepared such is put out of the autoclave. The foil bag is removed and, then, after removing also the assisting glass tube if used, the composite glass tube 1 is ready comprising a clear and transparent laminate made of the glass tube 2, the supporting anti-shatter plastic foil 4, and the adhesive anti-shatter plastic foil 3 there between.

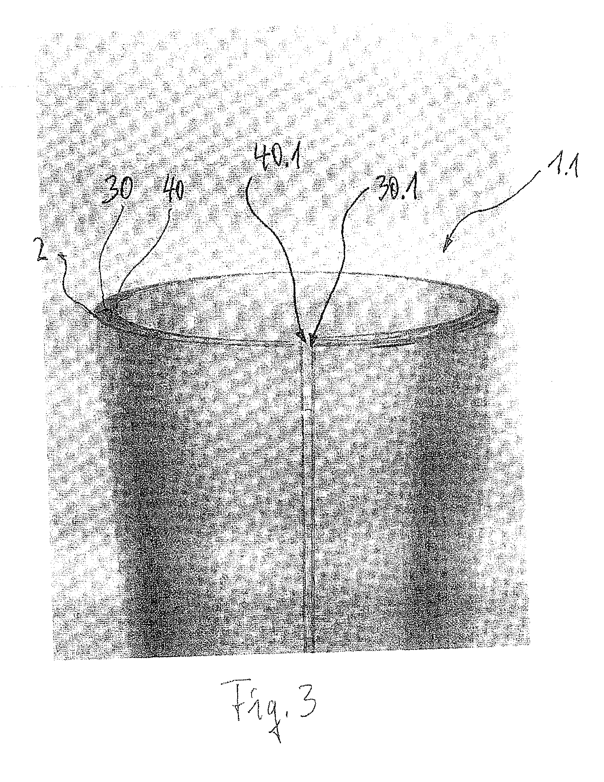

Fig. 3 shows a schematic view of an upper part of a further embodiment of a transparent composite glass tube 1.1 of the invention which comprises again an outer glass tube 2, a supporting anti-shatter plastic foil 40, for instance, a PET foil, and an intermediate adhesive anti-shatter plastic foil 30, for instance, a PVB foil, provided there between. The supporting anti-shatter plastic foil 40 shows segmentation with a lengthwise gap 40.1 and the adhesive anti-shatter plastic foil 30 shows similar segmentation with a lengthwise gap 30.1.

## Claims

1. Composite glass tube (1) which comprises a glass tube (2) and an anti-shatter layer construction provided on an inside surface of the glass tube (2) for restraining glass parts and splinters in case of breakage of the glass tube (2), wherein the anti-shatter layer construction comprises at least one supporting anti-shatter plastic foil (4) or layer and at least one adhesive anti-shatter plastic foil (3) or layer deposited or laminated on the inside surface (2.1) of the glass tube (2) wherein the supporting anti-shatter plastic foil (4) or layer is arranged on an inside surface (3.1) of the adhesive anti-shatter plastic foil (3) or layer.

2. Composite glass tube according to claim 1, **characterized in that** the supporting anti-shatter plastic foil (4) or layer comprises polyethylene terephthalate (PET) and/or polycarbonate (PC) and that the adhesive anti-shatter plastic foil (3) comprises polyvinyl butyral (PVB), polyurethane (PU) and/or ethylene vinyl acetate EVA.

3. Composite glass tube according to claims 1 or 2, **characterized in that** the supporting anti-shatter plastic foil (40) is segmented lengthwise and/or the adhesive anti-shatter plastic foil (30) is segmented lengthwise.

4. Composite glass tube according to any of the preceding claims, **characterized in that** the supporting anti-shatter plastic foil is segmented transversely and/or the adhesive anti-shatter plastic foil is segmented transversely.

5. Composite glass tube according to any of the preceding claims, **characterized in that** the composite glass tube (1) is used in a wall made of a plurality of composite glass tubes.

6. Method for manufacturing a composite glass tube (1) according to any of the preceding claims 1 to 5, comprising the following steps:
- depositing an adhesive anti-shatter plastic foil (3) or layer on an inside surface (2.1) of the glass tube (2) and then depositing the supporting anti-shatter plastic foil (4) or layer on an inside surface of the adhesive anti-shatter plastic foil (3) or layer; or
- depositing the supporting anti-shatter plastic foil (4) or layer on an outside surface (3.2) of the adhesive anti-shatter plastic foil (3) or layer to form a combined anti-shatter construction or foil and then depositing the combined anti-shatter construction or foil on the inside surface (2.1) of the glass tube (2); and then
- forming the composite glass tube (1) by using pressure and/or heat.

7. Method according to claim 6, **characterized by** evacuating the space between the supporting anti-shatter plastic foil (4) and the adhesive anti-shatter plastic foil (3) or layer and/or
evacuating the space between the glass tube (2) and the adhesive anti-shatter plastic foil (3) or the combined anti-shatter construction or foil, and/or
by evacuating the space between the glass tube (2) and the supporting anti-shatter plastic foil (4).

8. Method according to claim 7, **characterized in that** a foil bag is used for evacuating.

9. Method according to claim 7 or claim 8, **characterized in that** an assisting glass tube is used during evacuating.

10. Method according to any of the claims 6 to 9, **characterized by** pressing the supporting anti-shatter plastic foil (4) or layer and the glass tube (2) with intermediate adhesive anti-shatter plastic foil (3) or layer against each other and/or heating in an autoclave for forming the composite glass tube (1).
